(19) Europäisches Patentamt
European Patent Office
Office européen des brevets

(11) **EP 2 883 650 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**20.05.2026   Patentblatt 2026/21**

(45) Hinweis auf die Patenterteilung:
**14.07.2021   Patentblatt 2021/28**

(21) Anmeldenummer: **13197108.7**

(22) Anmeldetag: **13.12.2013**

(51) Internationale Patentklassifikation (IPC):
**B23K 1/00** (2006.01)       **B23K 1/012** (2006.01)
**B23K 35/02** (2006.01)       **F28F 1/12** (2006.01)
**B23K 101/14** (2006.01)      **B23K 103/10** (2006.01)
**B23K 35/28** (2006.01)       **B32B 15/01** (2006.01)
**F28F 21/08** (2006.01)       **C22C 21/02** (2006.01)
**B23K 1/20** (2006.01)

(52) Gemeinsame Patentklassifikation (CPC):
**B23K 1/0012; B23K 1/012; B23K 1/206;
B23K 35/0222; B23K 35/0233; B23K 35/0238;
B23K 35/28; B23K 35/286; B23K 35/288;
B32B 15/016; C22C 21/02; F28F 1/126;
F28F 21/084; F28F 21/089;** B23K 2101/14;  (Forts.)

(54) **Flussmittelfreies Fügen von Aluminiumverbundwerkstoffen**

Fluxless joining of aluminium composite materials

Assemblage sans décapant de matériaux composites en aluminium

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.06.2015   Patentblatt 2015/25**

(73) Patentinhaber: **Speira GmbH
41515 Grevenbroich (DE)**

(72) Erfinder:
• **Eckhard, Kathrin
50969 Köln (DE)**
• **Güßgen, Olaf
50931 Köln (DE)**

• **Janssen, Hartmut
40724 Hilden (DE)**

(74) Vertreter: **Cohausz & Florack
Patent- & Rechtsanwälte
Partnerschaftsgesellschaft mbB
Bleichstraße 14
40211 Düsseldorf (DE)**

(56) Entgegenhaltungen:
**EP-A2- 2 835 211        WO-A1-2013/164466
WO-A1-98/45082        FR-A1- 2 873 718
JP-A- H07 164 139     JP-A- H11 285 817
US-A- 3 779 839**

EP 2 883 650 B2

(52) Gemeinsame Patentklassifikation (CPC): (Forts.)
B23K 2103/10

**Beschreibung**

Die Erfindung betrifft die Verwendung eines Aluminiumverbundwerkstoffs bestehend aus mindestens einer Aluminiumkernlegierung und mindestens einer ein- oder beidseitig auf der Aluminiumkernlegierung vorgesehenen, äußeren Lotschicht, bestehend aus einer Aluminiumlotlegierung, wobei die Aluminiumlotschicht eine gebeizte Oberfläche aufweist und wobei der Aluminiumverbundwerkstoff in einem flussmittelfreien, thermischen Fügeverfahren verwendet wird und das Fügeverfahren in Anwesenheit eines Schutzgases erfolgt. Darüber hinaus betrifft die Erfindung ein Verfahren zur Herstellung eines bandförmigen Aluminiumverbundwerkstoffs bestehend aus mindestens einer Aluminiumkernlegierung und mindestens einer ein- oder beidseitig auf der Aluminiumkernlegierung vorgesehenen, äußeren Lotschicht, welche aus einer Aluminiumlotlegierung besteht, bei welchem durch Walzplattieren oder simultanes Gießen und anschließendes Walzen ein bandförmiger Aluminiumverbundwerkstoff hergestellt wird und anschließend die Aluminiumlotschicht mit einer wässrigen, sauren Beizlösung gebeizt wird. Schließlich betrifft die Erfindung auch ein Verfahren zum thermischen Fügen von Bauteilen aus einer Aluminiumlegierung, wobei der Aluminiumverbundwerkstoff mindestens eine Aluminiumkernlegierung und mindestens eine ein- oder beidseitig auf der Aluminiumkernlegierung vorgesehene, äußere Lotschicht bestehend aus einer Aluminiumlotlegierung aufweist.

Aluminiumverbundwerkstoffe bestehend aus mindestens einer Aluminiumkernlegierung und mindestens einer ein- oder beidseitig auf der Aluminiumkernlegierung angeordneten Aluminiumlotschicht werden zur Herstellung von gelöteten Konstruktionen verwendet. Häufig weisen die gelöteten Konstruktionen eine Vielzahl von Lötstellen auf, wie dies beispielsweise bei Wärmetauschern der Fall ist. Dabei werden zum Löten von Metallbauteilen verschiedene Lötverfahren eingesetzt. Eines der häufigsten Verfahren ist das sogenannte "Controlled Atmosphere Brazing"-(CAB)-Lötverfahren, bei welchem die Aluminiumbauteile in der Regel unter Verwendung von Flussmitteln gelötet werden und während des Lötvorganges einer Intergasatmosphäre, beispielweise einer Stickstoffatmosphäre ausgesetzt sind. Andere thermische Fügeverfahren verwenden ebenfalls Flussmittel und erweichen das Aluminiumlot ebenfalls bei Anwesenheit eines Schutzgases. Der Einsatz von korrosiven oder nicht korrosiven Flussmitteln birgt allerdings Nachteile, beispielsweise erhöhte Anlagenkosten und technische Probleme bei der Wechselwirkung von Resten des Flussmittels mit beispielsweise Kühlmittelzusätzen in einem Wärmetauscher. Darüber hinaus ist die Verwendung von Flussmittel auch in Bezug auf die Vermeidung von Umweltbelastungen und aus Arbeitssicherheitsgesichtspunkten problematisch. Schließlich ist bei dem CAB-Lötverfahren der Einsatz von Mg-haltigen Kernlegierungen problematisch, da Magnesium die Löteigenschaften unter Schutzgasatmosphäre negativ beeinflusst. Ferner kann es auch zu Verfärbungen der gelöteten Bauteile kommen. Aus der internationalen Patentanmeldung WO 2010/000666 A1 ist darüber hinaus ein Verfahren zum flussmittelfreien Löten mit dem CAB-Lötverfahren bekannt, bei welchem die Aluminiumlotschicht aus einer ersten Aluminiumlotschicht und einer zweiten Aluminiumlotschicht besteht. Die zweite Aluminium-Lotschicht besteht aus einer Al-Si Aluminiumlegierung, welche neben 5 Gew.-% - 20 Gew.-% Silizium auch 0,01 Gew.-% - 3 Gew.-% Magnesium enthält. Die erste Aluminiumlotschicht enthält dagegen 2 Gew.-% -14 Gew.-% Silizium und weniger als 0,4 Gew.-% Magnesium. Der zweischichtige Aufbau der Aluminiumlotschicht ist allerdings insofern nachteilig, als dass bei der Herstellung der zweischichtigen Aluminiumlotschicht höhere Kosten anfallen.

Darüber hinaus kann ein wesentlicher Nachteil gängiger zweischichtiger Aufbauten, beispielsweise mit einer außenliegenden Plattierung aus Reinaluminium, sein, dass ihre Verwendung nicht mit Flussmittel kompatibel ist. Nicht hinreichende Lötergebnisse, beispielsweise aufgrund temporär schlechterer Ofenatmosphäre mit zu hohem Sauerstoffpartialdruck oder zu hoher Feuchtigkeit in der Atmosphäre, können nicht optional durch den Einsatz von Flussmittel kompensiert werden.

Das zweite Verfahren, welches häufig angewendet wird, ist das Vakuumlöten, bei welchem die zu lötenden Bauteile in einer Atmosphäre mit sehr niedrigem Druck, beispielsweise etwa $10^{-5}$ mbar oder weniger gelötet werden. Das Vakuumlöten kann ohne Flussmittel erfolgen, wobei allerdings dem Aluminiumlot in der Regel ein bestimmter Anteil von Magnesium zugefügt wird, um ein besseres Lötergebnis zu erhalten. Der Einsatz von Mg-haltigem Lot ist mit zusätzlichen negativen Effekten verbunden, beispielsweise der Notwendigkeit für häufige Ofenreinigungsroutinen. Das Vakuumlöten ist allerdings apparativ sehr aufwändig und damit sehr kostenintensiv. Aus den japanischen Veröffentlichungen JP 04-1000696, JP 04-100674 sowie der JP 05-154693 ist die Verwendung eines alkalisch gebeizten Aluminiumverbundwerkstoffes in einem Vakuumlötverfahren oder mit Flussmitteln in einem CAB-Lötverfahren bekannt.

Die US-Patentschrift US 5,102,033 beschreibt dagegen ein Verfahren, bei welchem ein Aluminiumverbundwerkstoff bestehend aus einer Aluminiumkernlegierung und einer Aluminiumlotlegierungsschicht mit einer sauren Beizlösung, welche eine Mischung aus Salpetersäure und Flusssäure enthält, gebeizt und dann durch ein Vakuumlöten gelötet wird. Zwar nennt die US-Schrift auch konventionelle Lötverfahren. Diese sind aber in der Regel, sofern diese nicht im Vakuum durchgeführt werden, durch die Verwendung von Flussmitteln gekennzeichnet. Ebenso wird in der WO 98/45082 eine Aluminiumlötlegierung zum Löten unter Verwendung von Flussmitteln offenbart.

Die eigene veröffentlichte WO 2013164466 A1 offenbart zwar das Prinzip der Verwendung eines sauer gebeizten Aluminiumverbundwerkstoffes in einem flussmittelfreien thermischen Fügeverfahren. Angaben darüber hinaus sind jedoch nicht offenbart.

In der US 3,779,839 A wird ebenso ein Verfahren offenbart, bei welchem Aluminiumbauteile in einer alkalischen oder sauren Lösung gebeizt werden und anschließend durch flussmittelfreies Löten verbunden werden.

Die JP H11-285817 A betrifft eine Aluminiumlötlegierung mit einem spezifizierten Mg-, Bi- und Be-Gehalt, welche nach einem sauren Beizen mit einem Formöl überzogen wird. Nach dem Entfernen des Formöls kann die Legierung flussmittelfrei in einer Schutzgasatmosphäre gelötet werden.

Hiervon ausgehend liegt der vorliegenden Erfindung die Aufgabe zu Grunde, eine Verwendung eines Aluminiumverbundwerkstoffs mit Aluminiumlotschicht in einem thermischen Fügeverfahren vorzuschlagen, welche zu einer weiteren Kostensenkung und einer geringeren Umweltbelastung führt. Zudem soll ein Verfahren zur Herstellung des Aluminiumverbundwerkstoffs und ein Verfahren zum thermischen Fügen vorgestellt werden.

Die aufgezeigte Aufgabe wird durch eine Verwendung nach Anspruch 1, ein Verfahren nach Anspruch 7 und Anspruch 12 gelöst.

Erfindungsgemäß ist die gebeizte Oberfläche der Aluminiumlotschicht durch Beizen mit einer sauren, wässrigen Beizlösung enthaltend mindestens eine Mineralsäure oder mindestens eine Säure der Gruppe kurzkettiger Carbonsäuren und mindestens einen Komplexbildner oder mindestens eine komplexierende Mineralsäure gebeizt worden, wobei der Materialabtrag beim Beizen zwischen $0,05\ g/m^2$ und $6\ g/m^2$, vorzugsweise zwischen $0,1\ g/m^2$ und $1\ g/m^2$, besonders bevorzugt zwischen $0,2\ g/m^2$ und $0,4\ g/m^2$ beträgt.

Als Mineralsäuren werden $H_2SO_4$ mit 0,1% bis 20 Gew.-%, HCL mit 0,1% bis 10 Gew.-% sowie HF mit 20 ppm bis 1000 ppm oder eine Kombination der Mineralsäuren verwendet. Als komplexierende Mineralsäuren kommen HF mit 20 ppm bis 1000 ppm oder 20 ppm bis 600 ppm, besonders bevorzugt 300 ppm bis 600 ppm oder 300 ppm bis 480 ppm zum Einsatz. Eine besonders bevorzugte Kombination besteht aus $H_2SO_4$ mit 0,5% bis 2 Gew.-% und HF mit 20 ppm und 480 ppm.

Als Komplexbildner werden Fluoride mit 20 ppm bis 1000 ppm oder 20ppm bis 600 ppm, besonders bevorzugt 300 ppm bis 600 ppm oder 300 ppm bis 480 ppm verwendet. In den Versuchen hat sich vor allem gezeigt, dass bei dem Einsatz von Fluoriden eine Konzentration von maximal 300ppm bis 600ppm, bevorzugt 300ppm bis 480 ppm ausreicht, um in einer industriellen Umgebung eine schnelle Oberflächenbehandlung zu ermöglichen.

Anders als bisher bekannt, wurde herausgefunden, dass durch Beizen der Aluminiumlotschicht unter Verwendung mindestens einer Mineralsäure oder mindestens einer Säure der Gruppe kurzkettiger Karbonsäuren in Kombination mit einem Komplexbildner oder unter Verwendung komplexierender Mineralsäuren eine Oberflächenbeschaffenheit der Aluminiumlotschicht erzeugt werden kann, sodass diese in einem thermischen Fügeverfahren in Anwesenheit eines Schutzgases hervorragende Löteigenschaften bzw. Eigenschaften zum thermischen Fügen aufweist, ohne dass Flussmittel benötigt werden. Das Ergebnis ist insofern überraschend, als dass es hier auf die Kombination Materialabtrag zwischen $0,05\ g/m^2$ und $6\ g/m^2$, vorzugsweise zwischen $0,1\ g/m^2$ und $1\ g/m^2$, besonders bevorzugt zwischen $0,2\ g/m^2$ und $0,4\ g/m^2$ und der Komplexbildung durch die Beizlösung ankommt. Die Mineralsäure sorgt für den entsprechenden Materialabtrag beim Beizen, welcher notwendig ist, um die Oberfläche für das flussmittelfreie thermische Fügen unter Schutzgas bzw. Inertgasatmosphäre vorzubereiten. Es wird vermutet, dass der Materialabtrag in Verbindung mit dem Komplexbildner zu einer spezifischen Oberflächenkonfiguration der Aluminiumlotschicht führt, welche ein anschließendes Löten unter Schutzgas ohne die Verwendung von Flussmitteln erlaubt. Ist der Materialabtrag beispielsweise geringer als $0,05\ g/m^2$, werden nur schlechte Lötergebnisse erzielt. Ein höherer Materialabtrag als $6\ g/m^2$ verändert die Löteigenschaften nicht und führt in der Produktion zu einem unnötig hohen Materialverlust. Dieser kann bei Reduzierung des Materialabtrags auf $1\ g/m^2$ bzw. $0,4\ g/m^2$ weiter verringert werden. Ein Materialabtrag von mindestens $0,05\ g/m^2$ garantiert, dass die Löteigenschaften derart verbessert werden, dass eine bandweise Verarbeitung zu guten Lötergebnissen führt. Bei einem Materialabtrag bis $0,4\ g/m^2$ wird die Prozesssicherheit zum Erreichen der Löteigenschaften erhöht, ohne den Materialabtrag unnötig zu vergrößern.

Diese Ergebnisse konnten bei entsprechend eingestelltem Materialabtrag auch alleine mit einer komplexierenden Mineralsäure, wie beispielsweise HF mit 20 ppm bis 1000 ppm, erreicht werden. Dabei können für HF 20 ppm bis 1000 ppm oder 20ppm bis 600 ppm, besonders bevorzugt 300 ppm bis 600 ppm oder 300 ppm bis 480 ppm eingesetzt werden. Durch die Erfindung ist es nun auch möglich, dass Bauteile, die aufgrund hoher Ansprüche an die Sauberkeit der Oberfläche bisher ausschließlich im Vakuum gelötet werden konnten, in Zukunft auch im flussmittelfreien, kostengünstigeren CAB-Verfahren gefügt werden können.

Beispielsweise kann der Aluminiumverbundwerkstoff bevorzugt in einem flussmittelfreien CAB-Lötverfahren verwendet werden. Das CAB-Lötverfahren zeichnet sich dadurch aus, dass der Erwärmungsvorgang der Lötpartner in einer kontrollierten Inertgasatmosphäre, insbesondere unter weitgehendem Ausschluss von Sauerstoff und Luftfeuchtigkeit erfolgt.

Die Effektivität der eingesetzten Mineralsäure kann gemäß einer Ausführungsform dadurch weiter gesteigert werden, dass zusätzlich die Oberfläche der Aluminiumlotschicht vor oder während des Beizens entfettet worden ist.

Gemäß einer weiteren Ausgestaltung der Verwendung des Aluminiumverbundwerkstoffes wurde die Oberfläche des Aluminiumverbundwerkstoffes zuvor mit einer Mineralsäure und Fluoriden als Komplexbildner gebeizt. Es hat sich herausgestellt, dass Fluoride besonders gute Ergebnisse in Bezug auf ein flussmittelfreies Löten oder thermisches Fügen unter Schutzgas ermöglichen. Unter anderem wird dies darauf zurückgeführt, dass Fluoride in Verbindung mit Aluminium als Zentralatom eine sehr hohe Komplexbildungskonstante aufweisen und damit Legierungsbestandteile unmittelbar in Lösung bringen.

Die Verwendung eines Aluminiumverbundwerkstoffes mit einer entsprechend sauer gebeizten Oberfläche in einem Aluminiumlötverfahren wird beispielsweise dadurch weiter verbessert, dass als Aluminiumkernlegierung eine Aluminiumlegierung vom Typ AA1xxx, AA2xxx, AA3xxx AA5xxx oder AA6xxx vorgesehen ist, wobei der Mg-Gehalt in den angegebenen Aluminiumkernlegierungen jeweils maximal 1,0 Gew.-% beträgt. Aufgrund der nunmehr im thermischen Fügen unter Schutzgas verwendbaren Aluminiumkernlegierungen, insbesondere auch Mg-haltige Aluminiumkernlegierungen ist das Spektrum der Einsatzgebiete von gelöteten Konstruktionen deutlich breiter geworden. Insbesondere können auch schwer lötbare, beispielsweise Mg-haltige Aluminiumlegierungen, wie beispielsweise vom Legierungstyp AA5xxx oder AA6xxx mit einem Mg-Gehalt von maximal 1,0 Gew.-% gemäß einer weiteren Ausgestaltung in einem flussmittelfreien, thermischen Fügeverfahren unter Schutzgas gefügt werden.

Erfindungsgemäß weist die Aluminiumlotlegierung folgende Zusammensetzungen in Gew.-% auf:

$$6,5\ \% \leq Si \leq 15\ \%,$$

$$Fe \leq 1\ \%,$$

$$Cu \leq 0,3\ \%,$$

$$Mg \leq 2,0\ \%,$$

$$Mn \leq 0,15\ \%,$$

$$Zn \leq 0,15\ \%,$$

$$Ti \leq 0,30\ \%,$$

Rest Al und unvermeidbare Verunreinigungen einzeln maximal 0,05 %, in Summe maximal 0,15 %.

Als Aluminiumlotlegierung werden beispielsweise die Aluminiumlotlegierungen vom Typ AA4343 oder AA4045 oder AA4047 bevorzugt verwendet. Allen Aluminiumlotlegierungen, welche die oben genannte Spezifikation erfüllen, ist gemein, dass diese einen niedrigeren Schmelzpunkt als die Aluminiumkernlegierung aufweisen, sodass beim Erhitzen des zu lötenden Bauteils auf eine Temperatur unterhalb der Solidustemperatur der Aluminiumkernlegierung die Aluminiumlotschicht flüssig bzw. teilweise flüssig wird. Die Aluminiumkernlegierung schmilzt dagegen nicht. Die Si-Gehalte der Aluminiumlotlegierung liegen bevorzugt zwischen 7,5 Gew.-% und 13 Gew.-%, besonders bevorzugt zwischen 8,5 Gew.-% und 13 Gew.-% bzw. zwischen 10 Gew.-% und 13 Gew.-%.

Um die mechanischen Eigenschaften des Aluminiumverbundwerkstoffes im späteren Anwendungsfall zu gewährleisten, werden diese gemäß einer weiteren Ausgestaltung vor oder nach dem Beizen lösungsgeglüht, weich- oder rückgeglüht.

Ein in wirtschaftlich großem Maßstab herstellbarer Aluminiumverbundwerkstoff kann dadurch bereitgestellt werden, dass der Aluminiumverbundwerkstoff durch simultanes Gießen oder Walzplattieren hergestellt worden ist. Alternativ zum Simultangießen oder Walzplattieren besteht auch die Möglichkeit, die Aluminiumlotschicht durch thermisches Spritzen aufzubringen. Die erstgenannten Varianten sind allerdings die derzeit in großem industriellem Umfang genutzten Verfahren zur Herstellung eines Aluminiumverbundwerkstoffes, wobei sich der gegossene Werkstoff durch seine deutlichen Konzentrationsgradienten zwischen den verschiedenen Aluminiumlegierungsschichten von den diskreten Schichtzusammensetzungen des walzplattierten Werkstoffs unterscheiden. Beim Walzplattieren finden nur geringe Diffusionsprozesse zwischen den Schichten statt.

Vorzugweise wird ein Aluminiumverbundwerkstoffes verwendet, welcher dadurch gekennzeichnet ist, dass mindestens eine Aluminiumlotlegierungsschicht eine mittlere Dicke von mindestens 10 $\mu m$ aufweist. Es hat sich herausgestellt, dass bei geeigneter Bauteilgeometrie eine Aluminiumlotlegierungsschicht mit einer mittleren Dicke von mindestens 10 $\mu m$ besonders prozesssicher gute Lötergebnisse erzielt und ausreichende Festigkeiten der Lötverbindung in der Regel bereitstellt. Bevorzugt beträgt die Dicke der jeweiligen Lotschicht zwischen 5% und 25%, bevorzugt 10% bis 20% der Gesamtdicke des Verbundwerkstoffes.

Darüber hinaus besteht die Möglichkeit bei der Oberflächenbehandlung gleichzeitig weitere Arbeitsschritte wie beispielsweise das Aufbringen von Umformhilfen zu integrieren und so die weiteren Arbeitsschritte bei der Verwendung des Aluminiumverbundwerkstoffs zu reduzieren.

Gemäß einer zweiten Lehre der vorliegenden Erfindung wird die oben aufgezeigte Aufgabe durch ein Verfahren zur Herstellung eines bandförmigen Aluminiumverbundwerkstoffes, insbesondere eines erfindungsgemäß zu verwendenden Aluminiumverbundwerkstoffes dadurch gelöst, dass der Aluminiumverbundwerkstoff mit einer wässrigen Beizlösung gebeizt wird, welche mindestens eine Mineralsäure aus der Gruppe $H_2SO_4$, HCl oder HF, und mindestens einen Komplexbildner oder eine komplexierende Mineralsäure enthält, wobei der Materialabtrag beim Beizen zwischen 0,05 g/m² und 6 g/m², vorzugsweise zwischen 0,1 g/m² und 1 g/m², besonders bevorzugt zwischen 0,2 g/m² und 0,4 g/m² beträgt.

Der Aluminiumverbundwerkstoff kann mit einer Beizlösung gebeizt werden, welche als Mineralsäure $H_2SO_4$ mit 0,1% bis 20 Gew.-%, HCL mit 0,1% bis 10 Gew.-% oder HF mit 20 ppm bis 1000 ppm oder 20ppm bis 600 ppm, besonders bevorzugt 300 ppm bis 600 ppm oder 300 ppm bis 480 ppm oder eine Kombination der genannten Mineralsäuren aufweist und mindestens einen Komplexbildner enthält. Alternativ können als komplexierende Mineralsäuren HF mit 20 ppm bis 1000 ppm oder 20ppm bis 600 ppm, besonders bevorzugt 300 ppm bis 600 ppm oder 300 ppm bis 480 ppm zum Einsatz kommen. Es hat sich herausgestellt, dass es bei dem Verfahren auf die Kombination aus ausreichendem Materialabtrag zwischen 0,05 g/m² und 6 g/m², vorzugsweise zwischen 0,1 g/m² und 1 g/m², besonders bevorzugt zwischen 0,2 g/m² und 0,4 g/m² und der Komplexbildung durch die Beizlösung ankommt, um ein gutes Lötergebnis zu erzielen.

Wie bereits zuvor ausgeführt, ist gerade die Kombination aus einer Mineralsäure in Verbindung mit einem Komplexbildner, beispielsweise einer chelatisiernden Verbindung, in der Lage, die Oberfläche der Aluminiumlotlegierungsschicht derart zu konditionieren, dass beim späteren thermischen Fügen eine sehr gute Benetzbarkeit des Lötpartners erfolgt, insbesondere auch dann, wenn kein Flussmittel verwendet wird und das thermische Fügen unter Schutzgas ausgeführt wird. Die Konzentration der Mineralsäure sollte in der Regel zu einem pH-Wert von weniger als 4, vorzugsweise zu einem pH-Wert von 0 bis 3 führen..

Bevorzugt wird der Aluminiumverbundwerkstoff während des Beizens oder vor dem Beizen mit einem Entfettungsmedium entfettet. Hierdurch kann die Effektivität der Mineralsäure in Verbindung mit dem Komplexbildner noch einmal gesteigert werden.

Gemäß einer weiteren Ausgestaltung werden als Komplexbildner, Fluoride, Citrate, Oxalate oder Phosphate verwendet. Die Konzentrationen der Komplexbildner liegen bei 20 ppm bis 1000 ppm Fluorid, bevorzugt 20ppm bis 600 ppm, besonders bevorzugt 300 ppm bis 600 ppm oder 300 ppm bis 480 ppm, 0,001% bis 10 Gew.-% Citrat, besonders bevorzugt 0,5% bis 5 Gew.-% Citrat sowie 0,001% bis 5 Gew.-% Oxalat.

Insbesondere die komplexierende Mineralsäure HF hat aufgrund der hohen Komplexbildungskonstante der Fluoroaluminate bereits bei sehr geringen Konzentrationen große Auswirkungen auf das Lötergebnis, wie später gezeigt werden kann und führt auch bei kurzen Beizbehandlungen bereits zu einem guten Lötergebnis beim flussmittelfreien Löten unter Schutzgas.

Erfindungsgemäß weisen die Konzentrationen der Mineralsäure in der Beizlösung die folgenden Grenzen auf:

$H_2SO_4$: 0,1% bis 20 Gew.-%,
HCL: 0,1% bis 10 Gew.-%,
HF: 20ppm bis 1000 ppm.

Höhere Konzentrationen sind unabhängig von ihrer technischen Realisierbarkeit aus ökonomischen oder ökologischen Gründen nicht tragbar. Darüber hinaus zeigte sich, dass eine Kombination der Mineralsäuren $H_2SO_4$ und HF in den oben genannten Konzentrationen besonders gute Lötergebnisse erzielt. Eine besonders bevorzugte Kombination besteht aus $H_2SO_4$ mit 0,5% bis 2 Gew.-% und HF mit 20 ppm bis 1000 ppm oder 20ppm bis 600 ppm, besonders bevorzugt 300 ppm bis 600 ppm oder 300 ppm bis 480 ppm.

Optional ist mindestens ein Tensid in der wässrigen Beizlösung vorgesehen, um die Oberfläche des Aluminiumverbundwerkstoffes gleichzeitig zu entfetten und die Gleichmäßigkeit und Geschwindigkeit des Beizangriffs der Beizlösung zu erhöhen.

Die genannten Konzentrationen an Mineralsäuren ermöglichen es, durch Herabsetzung des pH-Wertes die Oberfläche der Aluminiumlotlegierungsschicht anzugreifen. Die Komplexbildner sorgen dafür, dass bei den genannten Konzentrationen an Mineralsäuren herausgelöste Legierungsbestandteile sehr gut wasserlöslich sind und insofern vom Reaktionsort entfernt werden können.. Durch die optional vorhandenen Tenside werden mögliche organische Beläge von der Oberfläche entfernt und eine Entfettung der Aluminiumbandoberfläche erreicht. Dies hat zur Folge, dass der Beizangriff nicht lokal durch organische Oberflächenbeläge inhibiert werden kann und somit mit sehr hoher Gleichmäßigkeit stattfindet.

Gemäß einer weiteren Ausgestaltung des Verfahrens enthält die Beizlösung zusätzlich $HNO_3$. Die Effektivität von HF durch die Kombination mit Salpetersäure $HNO_3$ und weiteren Mineralsäuren lässt sich weiter erhöhen, sodass ein verbessertes Lötergebnis bei geringerem HF-Einsatz erzielt wird. Die Konzentration von $HNO_3$ beträgt vorzugsweise 0,1 Gew.-% bis 20 Gew.-%.

Beträgt die Verweildauer des bandförmigen Aluminiumverbundwerkstoffes mit der Beizlösung 1 bis 20 Sekunden, bevorzugt 2 bis 8 Sekunden, kann ein wirtschaftlich durchführbarer Oberflächenbehandlungsschritt bereitgestellt werden, bei welchem beispielsweise ein ganzes Aluminiumband oberflächenbehandelt wird.

Um die Behandlungsdauer kann weiter verkürzt werden, wenn die Temperatur der Beizlösung 40° Celsius bis 85° Celsius beträgt, da hierdurch die Reaktivität der Reagenzien weiter erhöht wird. Temperaturen oberhalb von 85 °C erfordern zusätzliche Maßnahmen bei keinem deutlichen Gewinn an Verarbeitungsgeschwindigkeit. Ein bevorzugter Temperaturbereich liegt daher bei 50 °C bis 60 °C.

Gemäß einer dritten Lehre der vorliegenden Erfindung wird die Aufgabe durch ein Verfahren zum thermischen Fügen von Bauteilen aus einer Aluminiumlegierung bei erfindungsgemäßer Verwendung eines Aluminiumverbundwerkstoffes dadurch gelöst, dass der Aluminiumverbundwerkstoff mindestens eine Aluminiumkernlegierung und mindestens einer ein- oder beidseitig auf der Aluminiumkernlegierung vorgesehenen, äußeren Lotschicht, bestehend aus einer Aluminiumlotlegierung aufweist, wobei die Aluminiumlotschicht eine mit einem erfindungsgemäßen Verfahren gebeizte Oberfläche aufweist, der Aluminiumverbundwerkstoff in einem flussmittelfreien, thermischen Fügeverfahren gefügt wird und das Fügeverfahren in Anwesenheit eines Schutzgases stattfindet. Durch die Verwendung eines Schutzgases, beispielsweise Stickstoff, wird die Ausbildung eines Oxidfilms auf der Oberfläche des flüssigen Lots verhindert, welche eine deutlich höhere Schmelztemperatur aufweist, sodass der Lötprozess behindert wird. Es hat sich gezeigt, dass beim thermischen Fügen unter Verwendung eines Schutzgases bei erfindungsgemäßer Verwendung der Aluminiumverbundwerkstoffe mit sauer gebeizter Oberfläche, wobei die Oberfläche mit einem Gemisch aus einer Mineralsäure und einem Komplexbildnern oder einer komplexierenden Mineralsäure gebeizt wurde, hochqualitative Lötergebnisse auch ohne die Verwendung von Flussmitteln erreicht werden. Dies ist insbesondere bei einschichtigem Aufbau der Aluminiumlotschicht bisher nicht gelungen.

Besonders vorteilhaft sind dann auch die bereitgestellten thermisch gefügten Konstruktionen umfassend mindestens ein erstes und ein zweites thermisch gefügten Teil, wobei mindestens eines der Teile einen Aluminiumverbundwerkstoff mit einer Aluminiumlotschicht aufweist, wobei mindestens eine Aluminiumlotschicht des Aluminiumverbundwerkstoffs eine mit einem erfindungsgemäßen Verfahren gebeizte Oberfläche besitzt und in Anwesenheit eine Schutzgases ohne Flussmittel erzeugte thermische Fügezone zwischen dem ersten Teil und dem zweiten Teil vorgesehen ist. Der besondere Vorteil des thermischen Fügens unter Schutzgas ohne Verwendung von Flussmitteln liegt darin, dass nach dem Löten keine Flussmittelreste auf den Bauteiloberflächen verbleiben. Insbesondere bei Anwendungen, bei welchen die Anwesenheit von Resten der verwendeten Flussmittel zu Problemen führt, ist eine Vermeidung von Flussmitteln wünschenswert. Die Notwendigkeit im herkömmlichen CAB-Verfahren Flussmittel auf die Bauteiloberflächen zu applizieren, schränkt die Bauteilgeometrien darüber hinaus zusätzlich ein, als dass darauf geachtet werden muss, dass sämtlich Oberflächen in der Befluxungsstation für das Flussmittel zugänglich sein müssen. Dies schränkt die Komplexität der Geometrien stark ein, was bei einem flussmittelfreien Prozess nicht mehr der Fall ist. Dazu kommt, dass die Kosten der Flussmittel und die Betriebskosten für den Trocknungsschritt nach der Flussmittelapplikation generell vermieden werden können.

Vorzugsweise wird gemäß einer weiteren Ausgestaltung mindestens ein Blech oder Rohr, hergestellt durch eine erfindungsgemäße Verwendung eines Aluminiumverbundwerkstoffes in einem flussmittelfreien CAB-Lötverfahren gefügt.

Wie bereits zuvor ausgeführt, ist das CAB-Lötverfahren ein besonders wirtschaftliches Verfahren, bei welchem die Lötverbindungsstelle vollständig mit Schutzgas umgeben wird, bevor das Aluminiumlot aufschmilzt. Besondere Vorteile ergeben sich insbesondere bei der Verwendung des Aluminiumverbundwerkstoffs bei der Lötung von Wärmetauschern oder anderen eine Vielzahl an Lötstellen aufweisenden Bauteilen, wobei es vorteilhaft ist, dass die Benetzungseigenschaften des erfindungsgemäß verwendeten Aluminiumverbundwerkstoffs die Prozesssicherheit bei der flussmittelfreien Herstellung von Fügenähten durch Löten deutlich erhöht.

Im Weiteren soll die Erfindung anhand von Ausführungsbeispielen in Verbindung mit der Zeichnung näher erläutert werden. In der Zeichnung zeigt in

Fig. 1         eine perspektivische Darstellung der Lötversuchsgeometrie zur Bestimmung der Lötfähigkeiten der Aluminiumverbundwerkstoffe,

Fig. 2         eine Seitenansicht der Lötversuchsgeometrie,

Fig. 3         ein Foto eines gelöteten Ausführungsbeispiels bei einer nicht erfindungsgemäßen Verwendung des Aluminiumverbundwerkstoffes,

Fig. 4a), b)     zwei lichtmikroskopische Querschliffe eines Ausführungsbeispiels einer gelöteten Konstruktion unter Verwendung Mg-haltiger Aluminiumkernlegierungen,

Fig. 5    eine schematische Schnittansicht eines Ausführungsbeispiels eines Verfahrens zur Herstellung eines bandförmigen Aluminiumverbundwerkstoffes und

Fig. 6    in einer Schnittansicht ein Ausführungsbeispiel einer erfindungsgemäß gelöteten Konstruktion in Form eines Wärmetauschers.

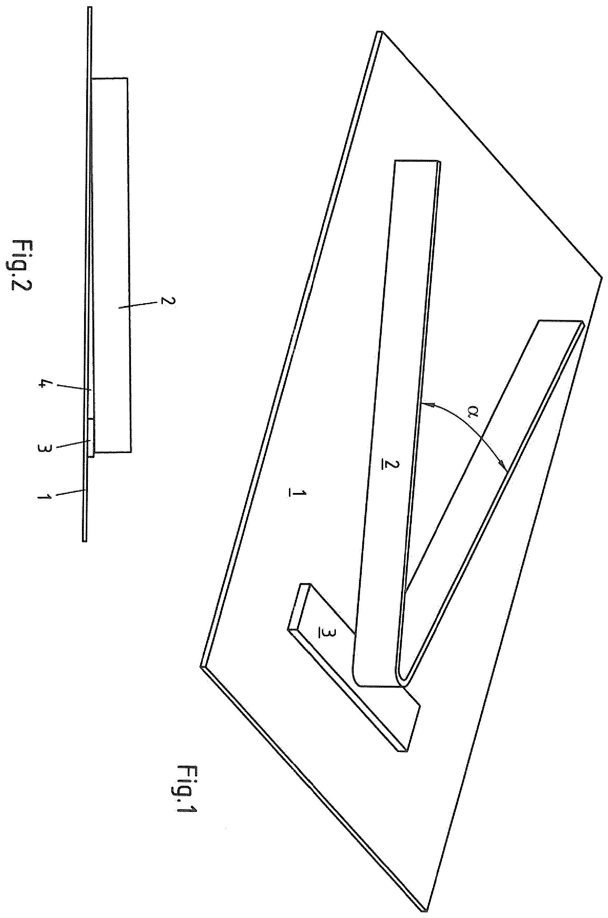

Um die Vorteile der erfindungsgemäßen Verwendung des Aluminiumverbundwerkstoffes zu untersuchen, wurden mit einer spezifischen Lötversuchsanordnung, wie sie in Fig. 1 perspektivisch dargestellt ist, eine Vielzahl von Versuchen durchgeführt. Grundsätzlich besteht die Lötversuchsanordnung aus insgesamt drei Teilen, einem Blech 1, einem Winkelblech 2 und einem Auflageblech 3 für das Winkelblech 2. Mit seinem geschlossenen Ende 2a liegt das Winkelblech 2 auf dem auf Blech 1 angeordneten Auflageblech 3 auf. Beide Schenkelenden 2b dagegen liegen auf dem Blech 1 auf, so dass, wie in der Seitenansicht in Fig. 2 dargestellt, ein sich verändernder Spalt von dem Auflagepunkt der Schenkelenden 2b des Winkelblechs 2 bis zum Auflagepunkt des geschlossenen Endes 2a auf dem Auflageblech 3 sich ergibt. Der Lötspalt 4 wird von den Winkelenden 2b bis zum geschlossenen Ende 2a des Winkelblechs immer größer. Durch den größer werdenden Lötspalt 4 besteht die Möglichkeit, zu beurteilen, inwiefern die Löteigenschaften des Aluminiumverbundwerkstoffs des Blechs 1 sich bei unterschiedlicher Oberflächenbehandlung verändern. Insbesondere wurde in den Lötergebnissen die Benetzung des bereitgestellten Lötspaltes mit einer Bewertung zwischen (1), für sehr gut, und (6), für ungenügend, bewertet, wobei ausschlaggebend waren das Spaltfüllungsvermögen zusammen mit der Ausprägung der Lötkehle. Mit sehr gut (1) wurden die Versuche gewertet, die eine nahezu vollständige Benetzung des Lötspaltes und eine breite Lötkehle zeigten. Mit (6) wurden die Versuche gewertet, welche zu keiner Lötung der Bauteile führten.

Das Blech 1 besteht im vorliegenden Ausführungsbeispiel aus dem jeweiligen getesteten Aluminiumlegierungsverbundwerkstoff, welcher eine walzplattierte Aluminiumlotlegierungsschicht aufweist. Die Länge der Schenkel des Winkels 2 betrugen jeweils 50 mm, wobei der Öffnungswinkel des Winkelblechs 35° ist. Das Auflageblech 3 hat eine Dicke von 1 mm, sodass der Höhenunterschied vom geschlossenen Ende des Winkelblechs bis zum Schenkelende 1 mm beträgt. Die Dicke des Winkelblechs 2 wurde konstant gehalten und betrug jeweils 0,6 mm. Das Winkelblech 2 sowie das Auflageblech 3 sind nicht mit einer Aluminiumlotschicht ausgestattet.

Generell ist die Lötbarkeit neben der Verwendung geeigneter lötbarer Werkstoffe auch immer eine Funktion des Bauteildesign, beispielsweise Geometrie, Spaltmaße, etc. und zusätzlich der Ofenatmosphäre. Hier spielen der Sauerstoffpartialdruck und die Feuchtigkeit der Atmosphäre eine Rolle. Die dargestellten Lötergebnisse wurden in einem Batchofen unter Stickstoffdurchfluss durchgeführt. Diese Lötergebnisse wurden auch in industriellen Produktionen, bei Anwendung eines Durchlaufofens erreicht.

In den mit L1 gekennzeichneten Lötversuchen wurden zwei verschiedene, walzplattierte Bleche untersucht. Das erste Blech V weist eine Aluminiumkernlegierungsschicht vom Typ AA3005 sowie eine einseitig aufplattierte Aluminiumlotlegierungsschicht vom Typ AA4045 und eine auf der gegenüberliegenden Seite aufplattierte, äußere Aluminiumlegierungsschicht aus einer Aluminiumlegierung vom Typ AA1050 auf. Die Gesamtdicke des Blechs V betrug 1,5mm, wobei die Dicken der aufplattierten Aluminiumlegierungsschichten im Mittel 112 $\mu$m für die Aluminiumlotlegierungsschicht und im Mittel 82 $\mu$m für die gegenüberliegende walzplattierte Aluminiumlegierungsschicht vom Typ AA1050 , betrug.

Der zweite untersuchte Werkstoff R bestand ebenfalls aus einem Kern bestehend aus einer Aluminiumlegierung vom Typ AA3005, welche beidseitig mit einer Aluminiumlotlegierungsschicht vom Typ AA4045 walzplattiert war. Die Gesamtdicke des Blechs R betrug 0,5 mm, sodass die Aluminiumlotlegierungsschichten im Mittel jeweils 57 $\mu$m Dicke, ca. 11,5 % der Gesamtdicke aufwiesen.

Die Bleche wurden anschließend mit den folgenden sechs verschiedenen Beizlösungen behandelt, wobei die Dauer der Behandlung aufgrund der Laborversuchsanordnung zwischen 10 Sekunden und 300 Sekunden betrug. Die wässrigen Beizlösungszusammensetzung wurde wie folgt vorgenommen:

Nr. 1: 0,73 Gew.-% $H_2SO_4$, HF: 300 bis 400 ppm, Tensid
Nr. 4: $HNO_3$ 13 Gew.-%,, HCL: 12,5 Gew.-% HF: 2,2 Gew.-%
Nr. 6: $HNO_3$: 25 Gew.-%
Nr. 7: $H_3PO_4$: 10 Gew.-%
Nr. 8: Zitronensäure 10 Gew.-%
Nr. 9: $H_3PO_4$: 5 Gew.-%, Zitronensäure: 5 Gew.-%

Die in der Tabelle 1 angegebenen Versuche wurden jeweils mit dem Blech V und dem Blech R durchgeführt und die Lötergebnisse entsprechend der benetzten Länge des Lötspaltes 4 und der Breite der Lötkehle ausgewertet. Bei der Lötung wurden die Proben entsprechend der in Fig. 1 dargestellten Versuchsanordnung in einem Batchofen für 6 Minuten bei einer Löttemperatur von 595° Celsius bis 610°Celsius erhitzt und ohne Flussmittel gelötet.

Überraschenderweise zeigte sich, dass, wie der Tabelle 2 zu entnehmen ist, zwei Bedingungen erfüllt sein müssen, um ein gutes Lötergebnis zu erzielen. Zunächst muss ein gewisser Beizabtrag erzielt werden, so ist aus Tabelle 2 zu erkennen, dass die Proben ohne oder mit nahezu keinem Beizabtrag, L1-5 und L1-6 oder L1-11 bis L1-14 ein sehr schlechtes Lötergebnis lieferten. Anhand des Beizabtrages allein lässt sich die Lötbarkeit jedoch nicht vorhersagen; so zeigen die Proben L1-3 und L1-4 bei kürzerer Einwirkzeit und niedrigerem Beizabtrag im Vergleich zu L1-1 und L1-2 ein besseres Lötergebnis.

Wird jedoch eine Kombination aus einer Mineralsäure und einem Komplexbildner, wie beispielsweise in Nr. 1, Nr. 4 und Nr. 9 verwendet, so zeigt sich ein extremer Unterschied in den Lötergebnissen. Die Lötergebnisse zeigen zusätzlich, dass aufgrund der hohen Komplexbildungskonstante der Fluoroaluminate selbst sehr geringe Mengen HF ausreichen, um als Komplexbildner in Verbindung mit einer Mineralsäure ein sehr gutes Lötergebnis bei einem CAB-Lötverfahren ohne Flussmittel zu erzielen.

Tabelle 1

| Nr | Beize | Dauer(s) | | | | |
|---|---|---|---|---|---|---|
| | | 10 | 30 | 60 | 120 | 300 |
| 1 | H2SO4/HF/Tensid | | x | | x | |
| 4 | HNO3/HCl/HF | | x | | x | |
| 6 | 20-30% HNO3 | | x | | x | |
| 7 | 10% H3PO4 | | x | | x | x |
| 8 | 10% Zitronensäure | | x | | x | x |
| 9 | 5%H3PO4 + 5% | | x | | x | x |

Tabelle 2

| Versuch Nr. | | Blech | Beize Nr | Zeit (s) | Beizabtrag | Lötergebnis |
|---|---|---|---|---|---|---|
| L1-1 | Erf. | V | 1 | 120 | k.A. | 1 |
| L1-2 | Erf. | R | 1 | 120 | 1,46 | 2 |
| L1-3 | Vgl. | V | 4 | 30 | k.A. | 1 |
| L1-4 | Vgl. | R | 4 | 30 | 0,54 | 1 |
| L1-5 | Vgl. | V | 6 | 120 | k.A. | 6 |
| L1-6 | Vgl. | R | 6 | 120 | 0,03 | 6 |
| L1-7 | Vgl. | V | 7 | 120 | k.A. | 3 |
| L1-8 | Vgl. | R | 7 | 120 | 0,90 | 3 |
| L1-9 | Vgl. | V | 7 | 300 | k.A. | 2 |
| L1-10 | Vgl. | R | 7 | 300 | 2,38 | 3 |
| L1-11 | Vgl. | V | 8 | 120 | k.A. | 6 |
| L1-12 | Vgl. | R | 8 | 120 | 0,00 | 6 |
| L1-13 | Vgl. | V | 8 | 30 | k.A. | 6 |
| L1-14 | Vgl. | R | 8 | 30 | 0,01 | 6 |
| L1-15 | Vgl. | V | 9 | 120 | k.A. | 3 |
| L1-16 | Vgl. | R | 9 | 120 | 0,64 | 2 |
| L1-17 | Vgl. | V | 9 | 300 | k.A. | 1 |
| L1-18 | Vgl. | R | 9 | 300 | 1,55 | 2 |

Die Beispiele L1-3 bis L1-18 der Tabelle 2 sind Vergleichsbeispiele. Nicht nur HF, sondern auch $H_3PO_4$ und Zitronensäure haben komplexbildende Eigenschaften in Bezug auf Aluminium, was unmittelbar an den Lötergebnissen abgelesen werden kann. $H_3PO_4$ hat gute bis befriedigende Lötergebnisse mit den Wertzahlen 2 und 3 ergeben. Eine Kombination aus 5%iger Phosphorsäure mit 5%iger Zitronensäure zeigte bei Einwirkzeiten von 120 und 300 Sekunden bereits gute Lötergebnisse. Zudem zeigte sich, wie Tabelle 2 zu entnehmen ist, dass der Materialabtrag von 0,01 g/m² bzw. 0,03 g/m² nicht ausreicht, um zu guten Lötergebnissen zu führen. Die Versuche, bei welchen ein Materialabtrag von mindestens 0,05 g/m² erzielt wurde, beispielsweise L1-4 mit 0,54 g/m², zeigen, dass sehr gute Lötergebnisse erzielbar sind, sofern der entsprechende Materialabtrag von mindestens 0,05 g/m² eingestellt und ein Komplexbildner eingesetzt wird.

Aufgrund der komplexbildenden Eigenschaften der Oxalsäure in Bezug auf Aluminium wird davon ausgegangen, dass eine Kombination der Oxalsäure mit einer Mineralsäure ebenfalls gute Lötergebnisse hervorruft.

Zusätzlich kann den Versuchsergebnissen aus Tabelle 2 entnommen werden, dass bei Schichtdicken der Aluminiumlotlegierung von 51 µm und 112 µm kein Unterschied in Bezug auf die Lötergebnisse festgestellt werden konnte. Es wird daher davon ausgegangen, dass, in Abhängigkeit von Bauteildesign und Güte der Ofenatmosphäre, bei Lotschichtdicken von mehr als 25 µm bzw. 30 µm sehr gute Lötergebnisse erzielt werden.

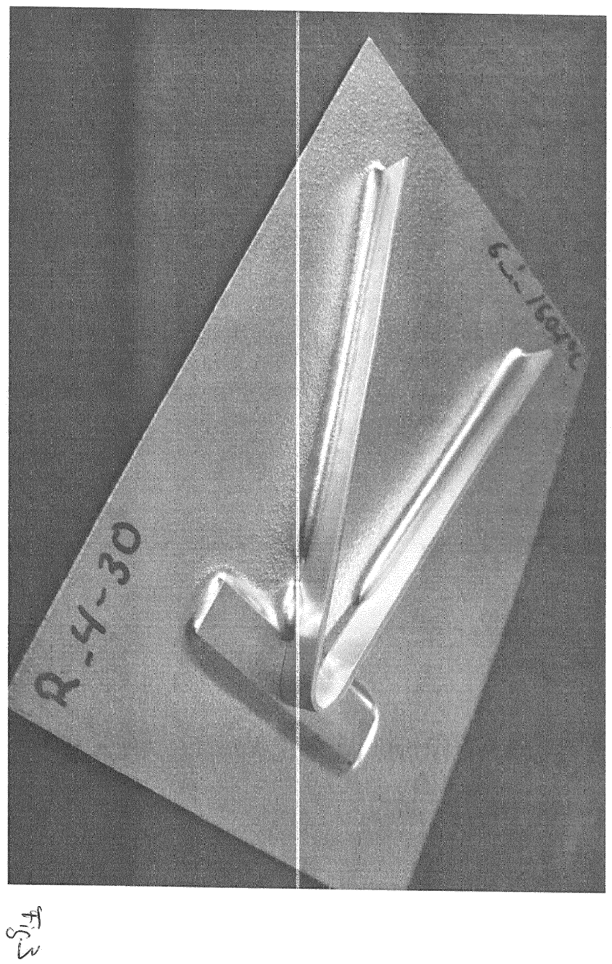

In Fig. 3 ist das Ausführungsbeispiel L1-4 gezeigt, welches mit der Beizlösung Nr. 4 behandelt ein sehr gutes Lötergebnis erzielte. Wie man erkennen kann, ist nahezu der gesamte Lötspalt 4 zwischen dem Winkelbleche 2 und dem Winkelblech 1 benetzt worden.

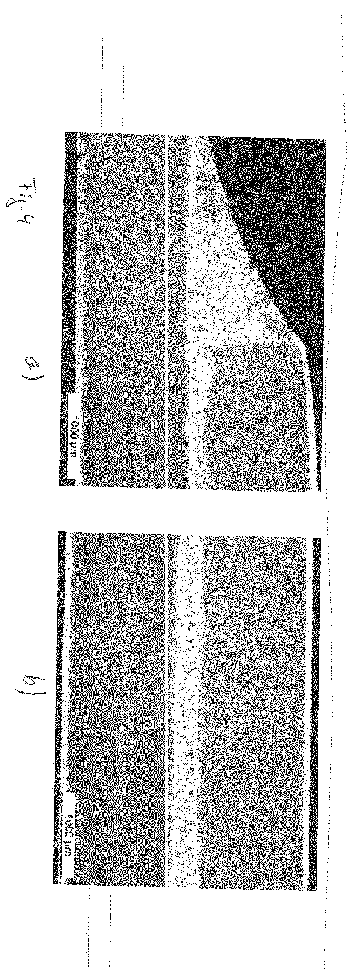

Fig. 4a) und b) zeigen lichtmikroskopische Aufnahmen eines Querschliffs eines weiteren im CAB-Lötverfahren flussmittelfrei gelöteten Ausführungsbeispiels, bestehend aus einem Aluminiumkernlegierungswerkstoff vom Typ AA3005 und jeweils beidseitig vorgesehenen Aluminiumlotlegierungen vom Typ AA4045. In dem Ausführungsbeispiel wurden, wie in Fig. b) zu erkennen ist, der Aluminiumwerkstoff mit sich selbst verlötet. In Fig. 4a) ist sehr schön zu sehen, dass trotz des Mg-haltigen Kerns, die Kernlegierung weist einen Mg-Gehalt von 0,3 Gew.-% auf, es zu einer sauberen Ausbildung der Lötnaht im Bereich des Überlappstoßes kommt. Mg-haltige Aluminiumkernlegierungen konnten bisher nur schwer flussmittelfrei im CAB-Lötverfahren gelötet werden.

Ein ähnliches, sehr gutes Ergebnis wurde beispielsweise auch mit einer Aluminiumlegierung vom Typ AA6063 als Kernlegierungsschicht erzielt, wobei auf der Kernlegierungsschicht eine einseitige Aluminiumlotlegierungsschicht vom Typ AA4045 mit einer mittleren Dicke von etwa 100 µm plattiert war. Auch die Aluminiumlegierungen vom Typ AA6063 zeigte mit einer Aluminiumlotlegierung plattiert, sehr gute Lötergebnisse, wenn diese mit dem erfindungsgemäßen Verfahren gebeizte Aluminiumlotlegierungsschicht in einem flussmittelfreien CAB-Lötverfahren verwendet wurde.

Darüber hinaus wurden weitere Versuche durchgeführt, wobei die Beizlösungen A bis D eingesetzt wurden. Mit den weiteren Versuchen sollte untersucht werden, inwieweit der Gehalt an HF das Lötergebnis beeinflusste und ob es auf die Höhe des Beizabtrags ankommt.

Tabelle 3

| Beizlösung | |
|---|---|
| A | 0,73 Gew.-% Schwefelsäure + Tensid |
| B | 450 ppm Fluorid + 0,73 Gew.-% Schwefelsäure + Tensid |
| C | 1000 ppm Fluorid + 0,73 Gew.-% Schwefelsäure+ Tensid |
| D | 1000ppm Fluorid |

Als Aluminiumverbundwerkstoff wurde ein Blech vom Typ R in 0,5 mm Dicke verwendet, welches einen Aluminiumkern aus einer Kernlegierung vom Typ AA3005 und beidseitig aufplattierte Aluminiumlotlegierungsschichten aufwies aus einer Aluminiumlegierung AA4045, welche eine mittlere Dicke von ca. 57 µm, d.h. ca. 11,5% der Gesamtdicke aufwiesen.

Einerseits enthielt die Beizlösung A lediglich Schwefelsäure und ein Tensid, sodass kein Komplexbildner, beispielsweise HF, in der Beizlösung vorhanden war. Die weiteren Beizlösungen B, C und D enthielten jeweils Fluorid, wobei der Gehalt von 450 ppm bis 1000 ppm gesteigert wurde. Die Beizlösung D enthielt alleine HF mit einem Gehalt von 1000 ppm.

Die entsprechend der Versuchsanordnung in Fig. 1 aufgebauten Lötversuche wurde in einem Tonnenofen Die Lötergebnisse wurden wie in den Tabellen zuvor anhand der entstandenen Lötnahtlänge mit ungenügend (6) bis sehr gut (1) bewertet.

Tabelle 4

| Versuch | Beizlösung | Beizdauer (s) | 10 | 30 | 60 | 180 |
|---|---|---|---|---|---|---|
| L2-1 | A | Vgl. | 6 | 6 | 6 | 6 |
| L2-2 | B | Erf. | 3 | 2 | 2 | 2 |

(fortgesetzt)

| Versuch | Beizlösung | Beizdauer (s) | 10 | 30 | 60 | 180 |
|---------|-----------|---------------|-----|-----|-----|------|
| L2-3 | C | Erf. | 2 | 2 | 1 | 1 |
| L2-4 | D | Erf. | 3 | 2 | 2 | 1 |

Die Tabelle 4 zeigt eindeutig, dass die Lötversuche L2-2 bis L2-4 mit erfindungsgemäßen Material ein hervorragendes Lötergebnis zeigen, wobei mit zunehmender Beizdauer das Ergebnis noch von gut auf sehr gut anzusteigen scheint. Die nur mit Schwefelsäure und einem Tensid behandelten Aluminiumlegierungsverbundwerkstoffe zeigten unabhängig von der Beizdauer, also von dem Beizabtrag, beim Löten im Batchofen mit Stickstoffdurchfluss ohne Verwendung von Flussmitteln unter Schutzgas keine Lötbarkeit. Die Löttemperatur lag bei den Lötversuchen für 6 Minuten im Bereich von 595°Celsius bis 607°Celsius.

Deutlich zeigt sich der Unterschied zwischen der Verwendung eines Komplexbildners wie HF ohne und mit Mineralsäure, wie im vorliegenden Beispiel einer Schwefelsäure. Die Kombination aus Mineralsäure und Komplexbildner in den Beizlösungen B und C zeigten sehr gute Ergebnisse, wobei sich die Ergebnisse zwischen 450 ppm und 1000 ppm nur marginal unterschieden.

Da HF in Bezug auf Aluminium sowohl als Säure und gleichzeitig als Komplexbildner wirkt, ermöglicht auch eine Beizlösung D, die ausschließlich HF enthält, sehr gute Lötergebnisse, wobei jedoch eine eindeutige Abhängigkeit von der Beizdauer erkennbar ist.

Grundsätzlich sollte die Menge an HF in der Beizlösung jedoch so niedrig wie möglich gehalten werden, da der Umgang mit HF im Fertigungsumfeld hohe Sicherheitsanforderungen erfordert. Die Kombination mit einer Mineralsäure ermöglicht es daher, die Konzentration an HF zu minimieren, daher wird vorzugsweise 20 ppm bis 1000 ppm oder 20ppm bis 600 ppm, besonders bevorzugt 300 ppm bis 600ppm oder 300ppm bis 480 ppm HF verwendet.

Um den minimalen Beizabtrag zu ermitteln, wurde ein Blech vom Typ R mit einer Beizlösung besprüht und die Kontaktzeit variiert. Nach Messung des Materialabtrags wurden Lötversuche durchgeführt und die Lötergebnisse wie bisher bewertet. Die Ergebnisse zeigt Tabelle 5. Als Beizlösung wurde eine wässrige Lösung mit 300 ppm Fluorid und 0,73 % Gew.-% Schwefelsäure verwendet.

Tabelle 5

|  | Kontaktzeit (s) | Materialabtrag (g/m$^2$) | Lötergebnis |
|---|---|---|---|
| Vgl. | 0 | 0 | 6 |
| Erf. | 1,5 | 0,05 | 3 |
| Erf. | 3 | 0,10 | 3 |
| Erf. | 6 | 0,17 | 2 |
| Erf. | 9 | 0,24 | 2 |
| Erf. | 12 | 0,31 | 1 |
| Erf. | 15 | 0,38 | 1 |
| Erf. | 18 | 0,47 | 1 |

Zu erkennen ist, dass unterhalb von 0,05 g/m$^2$ Materialabtrag sich offensichtlich die Lötergebnisse deutlich verschlechtern. Die besten Lötergebnisse wurden bei einem Materialabtrag ab ca. 0,3 g/m$^2$ beobachtet.

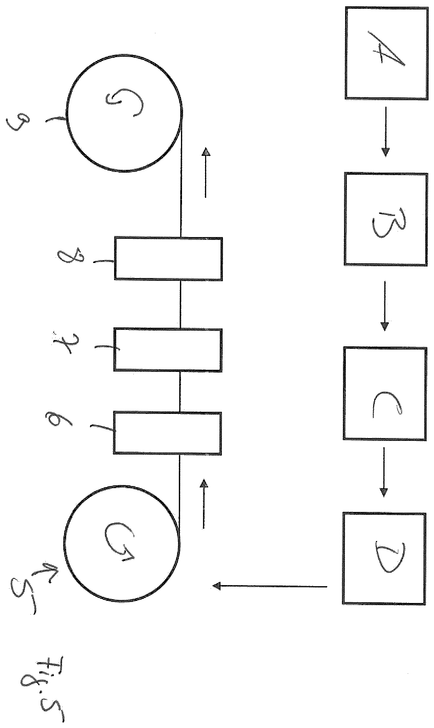

In Fig. 5 ist ein Ausführungsbeispiel für ein Verfahren zur Herstellung eines bandförmigen Aluminiumverbundwerkstoffes. Im Herstellschritt A wird der Aluminiumverbundwerkstoff durch simultanes Gießen von verschiedenen Schmelzen oder durch Walzplattieren hergestellt. Anschließend kann beispielsweise ein Kaltwalzen B auf Enddicke erfolgen, wobei während des Kaltwalzens mindestens eine Zwischenglühung erfolgen kann. Anschließend wird der Aluminiumverbundwerkstoff im Verfahrensschritt C beispielsweise weichgeglüht. Im Verfahrensschritt D wird zumindest die Aluminiumlotlegierungsschicht einer Oberflächenbehandlung unterzogen. Der Verfahrensschritt D ist für einen bandförmigen Aluminiumverbundwerkstoff anschließend dargestellt.

Der auf einem Coil 5 befindliche Aluminiumverbundwerkstoff wird optional einem Entfettungsschritt 6 unterzogen. Anschließend durchläuft der Aluminiumverbundwerkstoff den Beizschritt 7 in dem dieser beispielsweise durch ein Bad mit einer wässrigen, sauren Beizlösung geführt wird, welche neben einer Mineralsäure einen Komplexbildner aufweist, so dass ein Materialabtrag auf der Aluminiumlotlegierungsoberfläche erfolgt.

Nach einem Spülungs- und Trocknungsschritt 8 wird der oberflächenbehandelte Aluminiumverbundwerkstoff zu einem Coil 9 aufgehaspelt. Der beschriebene Oberflächenbehandlungsschritt D kann aber auch nicht bandförmig erfolgen oder unmittelbar am Auslauf des Herstellverfahrens, also des Kaltwalzens oder beispielsweise der Weichglühung, sofern ein Durchlaufofen für diese verwendet wird.

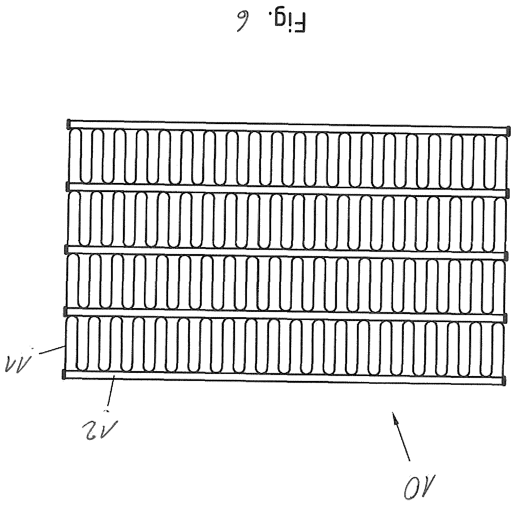

In Fig. 6 ist in einer Draufsicht ein Ausführungsbeispiel einer erfindungemäß thermisch gefügten Konstruktion in Form eines Wärmetauschers 10 dargestellt.

Die Lamellen 11 des Wärmetauschers 10 bestehen üblicherweise aus blankem oder beidseitig mit einem Aluminiumlot beschichtetem Aluminiumlegierungsband. Die Lamellen 11 werden mäanderförmig gebogen an Rohre 12 gelötet, so dass eine Vielzahl an Lötverbindungen benötigt wird. Es ist daher besonders vorteilhaft den erfindungsgemäßen Aluminiumverbundwerkstoff zu verwenden, da die besonders gute Lötergebnisse beim CAB-Lötverfahren auch ohne Flussmittel erzielt. Die fehlenden Flussmittelrückstände wirken sich im Vergleich zu mit Flussmitteln gelöteten Wärmetauschern positiv auf den Betrieb der Wärmetauscher aus.

Die Versuchsergebnisse zeigten insbesondere, dass die Verwendung eines Aluminiumverbundwerkstoffes, welcher eine sauer gebeizte Oberfläche einer Aluminiumlotlegierungsschicht aufweist, wobei die Beize mit einer Kombination mit einer Mineralsäure und einem Komplexbildner durchgeführt wurde, sehr gute Eigenschaften in Bezug auf dessen Lötfähigkeit in einem flussmittelfreien unter Schutzgas durchgeführten thermischen Fügeverfahren, beispielsweise einem CAB-Lötverfahren aufweist.

## Patentansprüche

1. Verwendung eines Aluminiumverbundwerkstoffs in einem thermischen Fügeverfahren bestehend aus mindestens einer Aluminiumkernlegierung und mindestens einer ein- oder beidseitig auf der Aluminiumkernlegierung vorgesehenen, äußeren Lotschicht bestehend aus einer Aluminiumlotlegierung, wobei die Aluminiumlotlegierung folgende Zusammensetzung in Gew.-% aufweist:

$$6{,}5\ \% \leq \mathrm{Si} \leq 15\ \%,$$

$$\mathrm{Fe} \leq 1\ \%,$$

$$\mathrm{Cu} \leq 0{,}3\ \%,$$

$$\mathrm{Mg} \leq 2{,}0\ \%,$$

$$\mathrm{Mn} \leq 0{,}15\ \%,$$

$$\mathrm{Zn} \leq 0{,}15\ \%,$$

$$\mathrm{Ti} \leq 0{,}30\ \%,$$

Rest Al und unvermeidbare Verunreinigungen einzeln maximal 0,05 %, in Summe maximal 0,15 %, wobei die Aluminiumlotschicht eine sauer gebeizte Oberfläche aufweist und wobei der Aluminiumverbundwerkstoff in einem flussmittelfreien, thermischen Fügeverfahren verwendet wird und das Fügeverfahren in Anwesenheit eines Schutzgases erfolgt,
wobei die gebeizte Oberfläche der Aluminiumlotschicht mit einer sauren, wässrigen Beizlösung gebeizt worden ist, enthaltend:

- mindestens eine Mineralsäure aus der Gruppe $H_2SO_4$, HCl oder HF und mindestens einen Komplexbildner aus der Gruppe Fluoride, Citrate oder Oxalate, wobei die Konzentrationen der Mineralsäuren in der Beizlösung folgende Grenzen aufweisen:

$H_2SO_4$ : 0,1 % bis 20 Gew.-%,
HCl : 0,1 % bis 10 Gew.-%
HF: 20 ppm bis 1000 ppm,
und die Konzentration der Komplexbildner

20 ppm bis 1000 ppm Fluorid,
0,001% bis 10 Gew.-% Citrat,
0,001% bis 5 Gew.-% Oxalat beträgt
oder

- als komplexierende Mineralsäure HF mit 20ppm bis 1000 ppm,

wobei der Materialabtrag beim Beizen zwischen 0,05 g/m$^2$ und 6 g/m$^2$ beträgt.

**2.** Verwendung nach Anspruch 1,
wobei der Aluminiumverbundwerkstoff in einem flussmittelfreien CAB-Lötverfahren verwendet wird.

**3.** Verwendung nach Anspruch 1 oder 2,
wobei die Oberfläche mit einer Mineralsäure und Fluoriden als Komplexbildner gebeizt wurde.

**4.** Verwendung nach einem der Ansprüche 1 bis 3,
wobei als Aluminiumkernlegierung eine Aluminiumlegierung vom Typ AA1xxx, AA2xxx, AA3xxx, AA5xxx oder AA6xxx vorgesehen ist, wobei der Mg-Gehalt in den angegebenen Aluminiumkernlegierungen jeweils maximal 1,0 Gew.-% beträgt.

**5.** Verwendung nach einem der Ansprüche 1 bis 4,
wobei der Aluminiumverbundwerkstoff vor dem Beizen weich- oder rückgeglüht oder lösungsgeglüht wurde.

**6.** Verwendung nach einem der Ansprüche 1 bis 5,
wobei die mindestens eine Aluminiumlotlegierungsschicht eine mittlere Dicke von mindestens 10 $\mu$m aufweist.

**7.** Verfahren zur Herstellung eines bandförmigen Aluminiumverbundwerkstoffs, insbesondere für eine Verwendung nach einem der Ansprüche 1 bis 6, bestehend aus mindestens einer Aluminiumkernlegierung und mindestens einer ein- oder beidseitig auf der Aluminiumkernlegierung vorgesehenen, äußeren Lotschicht, welche aus einer Aluminiumlotlegierung besteht, wobei die Aluminiumlotlegierung folgende Zusammensetzung in Gew.-% aufweist:

$$6,5\ \% \le Si \le 15\ \%,$$

$$Fe \le 1\ \%,$$

$$Cu \le 0,3\ \%,$$

$$Mg \le 2,0\ \%,$$

$$Mn \le 0,15\ \%,$$

$$Zn \le 0,15\ \%,$$

$$Ti \le 0,30\ \%,$$

Rest Al und unvermeidbare Verunreinigungen einzeln maximal 0,05 %, in Summe maximal 0,15 %, bei welchem durch Walzplattieren oder simultanen Gießen und anschließendes Walzen ein bandförmiger Aluminiumverbundwerkstoff hergestellt wird und
die Aluminiumlotschicht des bandförmigen Aluminiumverbundwerkstoffs anschließend mit einer sauren Beizlösung gebeizt wird,
wobei der Aluminiumverbundwerkstoff mit einer wässrigen Beizlösung gebeizt wird, welche mindestens eine Mineralsäure aus der Gruppe $H_2SO_4$, HCl oder HF und mindestens einen Komplexbildner aus der Gruppe Fluoride, Citrate oder Oxalate enthält, wobei die Konzentrationen der Mineralsäuren in der Beizlösung folgende Grenzen aufweisen:

$H_2SO_4$ : 0,1 % bis 20 Gew.-%,
HCl : 0,1 % bis 10 Gew.-%
HF: 20 ppm bis 1000 ppm,
und die Konzentration der Komplexbildner
20 ppm bis 1000 ppm Fluorid,
0,001% bis 10 Gew.-% Citrat,
0,001% bis 5 Gew.-% Oxalat beträgt
oder
als komplexierende Mineralsäure HF mit 20ppm bis 1000 ppm enthält,
wobei der Materialabtrag beim Beizen zwischen 0,05 g/m$^2$ und 6 g/m$^2$ beträgt.

8.  Verfahren nach Anspruch 7,
    wobei mindestens ein Tensid in der Beizlösung enthalten ist.

9.  Verfahren nach Anspruch 7 oder 8,
    wobei die Beizlösung zusätzlich $HNO_3$ in einer Konzentration von 0,1 Gew.-% bis 20 Gew.-% enthält.

10. Verfahren nach einem der Ansprüche 7 bis 9,
    wobei die Verweildauer des bandförmigen Aluminiumverbundwerkstoffes in der Beizlösung 1 bis 20 s, bevorzugt 2 bis 8 s beträgt.

11. Verfahren nach einem der Ansprüche 7 bis 10,
    wobei die Temperatur der Beizlösung 40 °C bis 80 °C beträgt.

12. Verfahren zum thermischen Fügen von Bauteilen aus einer Aluminiumlegierung gemäß einer Verwendung eines Aluminiumverbundwerkstoff nach einem der Ansprüche 1 bis 6, wobei der Aluminiumverbundwerkstoff mindestens eine Aluminiumkernlegierung und mindestens eine ein- oder beidseitig auf der Aluminiumkernlegierung vorgesehene, äußere Lotschicht bestehend aus einer Aluminiumlotlegierung aufweist, wobei die Aluminiumlotschicht eine mit einem Verfahren nach einem der Ansprüche 7 bis 10 gebeizte Oberfläche aufweist, der Aluminiumverbundwerkstoff in einem flussmittelfreien, thermischen Fügeverfahren gefügt wird und das Fügeverfahren in Anwesenheit eines Schutzgases stattfindet.

13. Verfahren nach Anspruch 12,
    wobei mindestens ein Blech oder Rohr hergestellt durch Verwendung eines Aluminiumverbundwerkstoffs gemäß einem der Ansprüche 1 bis 6 in einem flussmittelfreien CAB-Lötverfahren gefügt wird.

14. Verfahren nach Anspruch 12 oder 13,
    wobei ein Wärmetauscher gefügt wird.

**Claims**

1.  Use of an aluminium composite material in a thermal joining method, consisting of at least one aluminium core alloy and at least one external brazing layer consisting of an aluminium brazing alloy and provided on one or both sides of the aluminium core alloy, wherein

    the aluminium brazing alloy has the following composition in wt.-%:

    $$6.5\ \% \leq Si \leq 15\ \%,$$

    $$Fe \leq 1\ \%,$$

    $$Cu \leq 0.3\ \%,$$

    $$Mg \leq 2.0\ \%,$$

$$Mn \leq 0.15 \%,$$

$$Zn \leq 0.15 \%,$$

$$Ti \leq 0.30 \%,$$

the remainder being Al and unavoidable impurities individually at most 0.05 %, in total at most 0.15 %, wherein the aluminium brazing layer has an acidly pickled surface and wherein the aluminium composite material is used in a flux-free thermal joining method and the joining method is carried out in the presence of a protective gas, wherein

the pickled surface of the aluminium brazing layer has been pickled with an acid aqueous pickling solution containing:

- at least one mineral acid from the group $H_2SO_4$, HCl, or HF and at least one complex-forming agent from the group fluorides, citrates, or oxalates, wherein the concentrations of the mineral acids in the pickling solution have the following limits:

$H_2SO_4$: 0.1 % to 20 wt.-%,
HCl: 0.1 % to 10 wt.-%,
HF: 20 ppm to 1,000 ppm,
and the concentration of the complex-forming agents is:

20 ppm to 1,000 ppm fluoride,
0.001 % to 10 wt.-% citrate,
0.001 % to 5 wt.-% oxalate,
or

- as complexing mineral acid HF with 20 ppm to 1,000 ppm,

wherein the removal of material in the pickling is between 0.05 $g/m^2$ and 6 $g/m^2$.

2. Use according to claim 1,
   wherein
   the aluminium composite material is used in a flux-free CAB brazing method.

3. Use according to claim 1 or 2,
   wherein
   the surface was pickled with a mineral acid and fluorides as complex-forming agent.

4. Use according to one of claims 1 to 3,
   wherein
   an aluminium alloy of the type AA1xxx, AA2xxx, AA3xxx, AA5xxx or AA6xxx is provided as aluminium core alloy, wherein the Mg content in the specified aluminium core alloys is in each case at most 1.0 wt.-%.

5. Use according to one of claims 1 to 4,
   wherein
   the aluminium composite material was soft annealed or re-annealed or solution annealed before the pickling.

6. Use according to one of claims 1 to 5,
   wherein
   the at least one aluminium brazing alloy layer has a mean thickness of at least 10 $\mu$m.

7. Method for the production of a strip-shaped aluminium composite material, in particular for a use according to one of claims 1 to 6, consisting of at least one aluminium core alloy and at least one external brazing layer consisting of an aluminium brazing alloy and provided on one or both sides of the aluminium core alloy, wherein

the aluminium brazing alloy has the following composition in wt.-%:

$$6.5 \% \le Si \le 15 \%,$$

$$Fe \le 1 \%,$$

$$Cu \le 0.3 \%,$$

$$Mg \le 2.0 \%,$$

$$Mn \le 0.15 \%,$$

$$Zn \le 0.15 \%,$$

$$Ti \le 0.30 \%,$$

the remainder being Al and unavoidable impurities individually at most 0.05 %, in total at most 0.15 %, in which a strip-shaped aluminium composite material is produced by roll bonding or by simultaneous casting followed by rolling, and the aluminium brazing layer of the strip-shaped aluminium composite material is then pickled with an acid pickling solution,
wherein
the aluminium composite material is pickled with an aqueous picking solution containing at least one mineral acid from the group $H_2SO_4$, HCl, or HF and at least one complex-forming agent from the group fluorides, citrates, or oxalates,
wherein the concentrations of the mineral acids in the pickling solution have the following limits:
$H_2SO_4$: 0.1 % to 20 wt.-%,
HCl: 0.1 % to 10 wt.-%,
HF: 20 ppm to 1,000 ppm
and the concentration of the complex-forming agents is:

20 ppm to 1,000 ppm fluoride,
0.001 % to 10 wt.-% citrate,
0.001 % to 5 wt.-% oxalate,
or
containing as complexing mineral acid HF with 20 ppm to 1,000 ppm, wherein the removal of material in the pickling is between 0.05 g/m$^2$ and 6 g/m$^2$.

8. Method according to claim 7,
wherein
the pickling solution contains at least one surfactant.

9. Method according to claim 7 or 8,
wherein
the pickling solution in addition contains $HNO_3$ in a concentration of 0.1 wt.-% to 20 wt.-%.

10. Method according to one of claims 7 to 9,
wherein
the dwell time of the strip-shaped aluminium composite material in the pickling solution is 1 to 20 s, preferably 2 to 8 s.

11. Method according to one of claims 7 to 10,
wherein the temperature of the pickling solution is 40 °C to 80 °C.

12. Method for the thermal joining of structural parts made of an aluminium alloy in accordance with a use of an aluminium composite material according to one of claims 1 to 6, wherein the aluminium composite material comprises at least one aluminium core alloy and at least one external brazing layer consisting of an aluminium brazing alloy and provided on one or both sides of the aluminium core alloy, wherein the aluminium brazing layer has a surface pickled by a method according to one of claims 7 to 11, the aluminium composite material is joined in a flux-free thermal joining method and the joining method takes place in the presence of a protective gas.

**13.** Method according to claim 12,
wherein
at least one sheet or tube produced by the use of an aluminium composite material according to one of claims 1 to 6 is joined in a flux-free CAB brazing method.

**14.** Method according to claim 12 or 13,
wherein
a heat exchanger is joined.


**Revendications**

**1.** Utilisation d'un matériau composite en aluminium dans un procédé d'assemblage thermique, consistant en au moins un alliage de noyau en aluminium et en au moins une couche de brasage extérieure constituée d'un alliage de brasage en aluminium et prévue sur un ou les deux côtés de l'alliage de noyau en aluminium, dans lequel

l'alliage de brasage en aluminium présente la composition suivante en % en poids :

$$6{,}5 \ \% \leq Si \leq 15 \ \%,$$

$$Fe \leq 1 \ \%,$$

$$Cu \leq 0{,}3 \ \%,$$

$$Mg \leq 2{,}0 \ \%,$$

$$Mn \leq 0{,}15 \ \%,$$

$$Zn \leq 0{,}15 \ \%,$$

$$Ti \leq 0{,}30 \ \%,$$

la partie résiduelle étant Al et les impuretés inévitables individuellement 0,05 % au maximum, au total 0,15 % au maximum, dans lequel la couche de brasage en aluminium présente une surface décapée à l'acide et dans lequel le matériau composite en aluminium est utilisé dans un procédé d'assemblage thermique sans flux et le procédé d'assemblage est réalisé en présence d'un gaz protecteur, dans lequel
la surface décapée de la couche de brasage en aluminium a été décapée avec une solution de décapage acide aqueuse comprenant :

- au moins un acide minéral du groupe de $H_2SO_4$, HCl ou HF et au moins un agent complexant du groupe des fluorures, citrates ou oxalates, les concentrations des acides minéraux dans la solution de décapage ayant les limites suivantes :

$H_2SO_4$ : 0,1 % à 20 % en poids,
HCl : 0,1 % à 10 % en poids,
HF: 20 ppm à 1000 ppm,
et la concentration des agents complexants étant :
20 ppm à 1000 ppm de fluorure,
0,001 % à 10 % en poids de citrate,
0,001 % à 5 % en poids d'oxalate,
ou

- en tant qu'acide minéral complexant HF avec 20 ppm à 1000 ppm, l'enlèvement de matière pendant le décapage étant compris entre 0,05 g/m$^2$ et 6 g/m$^2$.

2. Utilisation selon la revendication 1,
dans lequel
le matériau composite en aluminium est utilisé dans un procédé de brasage CAB sans flux.

3. Utilisation selon la revendication 1 ou 2,
dans lequel
la surface a été décapée avec un acide minéral et des fluorures comme agents complexants.

4. Utilisation selon l'une des revendications 1 à 3,
dans lequel
un alliage d'aluminium du type AA1xxx, AA2xxx, AA3xxx, AA5xxx ou AA6xxx est prévu comme alliage de noyau en aluminium, la teneur en Mg dans les alliages de noyau en aluminium spécifiés étant dans chaque cas au maximum de 1,0 % en poids.

5. Utilisation selon l'une des revendications 1 à 4,
dans lequel
le matériau composite en aluminium a été soumis à un recuit doux ou à un recuit revers ou à un recuit de mise en solution avant le décapage.

6. Utilisation selon l'une des revendications 1 à 5,
dans lequel
la au moins une couche d'alliage de brasage en aluminium a une épaisseur moyenne d'au moins 10 $\mu$m.

7. Procédé pour la fabrication d'un matériau composite en aluminium en forme de bande, en particulier pour une utilisation selon l'une des revendications 1 à 6, consistant en au moins un alliage de noyau en aluminium et en au moins une couche de brasage extérieure constituée d'un alliage de brasage en aluminium et prévue sur un ou les deux côtés de l'alliage de noyau en aluminium, dans lequel l'alliage de brasage en aluminium présente la composition suivante en % en poids :

$$6,5 \text{ %} \leq \text{Si} \leq 15 \text{ %},$$

$$\text{Fe} \leq 1 \text{ %},$$

$$\text{Cu} \leq 0,3 \text{ %},$$

$$\text{Mg} \leq 2,0 \text{ %},$$

$$\text{Mn} \leq 0,15 \text{ %},$$

$$\text{Zn} \leq 0,15 \text{ %},$$

$$\text{Ti} \leq 0,30 \text{ %},$$

la partie résiduelle étant Al et les impuretés inévitables individuellement 0,05 % au maximum, au total 0,15 % au maximum, dans lequel un matériau composite en aluminium en forme de bande est fabriqué par placage par laminage ou par coulée simultanée et laminage ultérieur, et la couche de brasage en aluminium du matériau composite en aluminium en forme de bande est ensuite décapée avec une solution de décapage acide,
dans lequel
le matériau composite en aluminium est décapé avec une solution de décapage aqueuse comprenant au moins un acide minéral du groupe de H$_2$SO$_4$, HCl ou HF et au moins un agent complexant du groupe des fluorures, citrates ou oxalates, les concentrations des acides minéraux dans la solution de décapage ayant les limites suivantes :

$H_2SO_4$ : 0,1 % à 20 % en poids,
HCl : 0,1 % à 10 % en poids,
HF : 20 ppm à 1000 ppm,
et la concentration des agents complexants étant :

20 ppm à 1000 ppm de fluorure,
0,001 % à 10 % en poids de citrate,
0,001 % à 5 % en poids d'oxalate,
ou
comprenant en tant qu'un acide minéral complexant HF avec 20 ppm à 1000 ppm,
l'enlèvement de matière pendant le décapage étant compris entre 0,05 g/m$^2$ et 6 g/m$^2$.

8. Procédé selon la revendication 7,
dans lequel
au moins un agent tensioactif est compris dans la solution de décapage.

9. Procédé selon la revendication 7 ou 8,
dans lequel
la solution de décapage comprend en outre du $HNO_3$ dans une concentration de 0,1 % à 20 % en poids.

10. Procédé selon l'une des revendications 7 à 9,
dans lequel
le temps de séjour du matériau composite en aluminium en forme de bande dans la solution de décapage est de 1 à 20 s, de préférence de 2 à 8 s.

11. Procédé selon l'une des revendications 7 à 10,
dans lequel
la température de la solution de décapage est de 40 °C à 80 °C.

12. Procédé pour l'assemblage thermique de composants en alliage d'aluminium selon une utilisation d'un matériau composite en aluminium selon l'une des revendications 1 à 6, dans lequel le matériau composite en aluminium comprend au moins un alliage de noyau en aluminium et au moins une couche de brasage extérieure constituée d'un alliage de brasage en aluminium et prévue sur un ou les deux côtés de l'alliage de noyau en aluminium, dans lequel la couche de brasage en aluminium présente une surface décapée par un procédé selon l'une des revendications 7 à 11, le matériau composite en aluminium est assemblé dans un procédé d'assemblage thermique sans flux et le procédé d'assemblage a lieu en présence d'un gaz protecteur.

13. Procédé selon la revendication 12,
dans lequel
au moins une feuille ou un tube fabriqué en utilisant un matériau composite en aluminium selon l'une des revendications 1 à 6 est assemblé dans un procédé de brasage CAB sans flux.

14. Procédé selon la revendication 12 ou 13,
dans lequel
un échangeur de chaleur est assemblé.

Fig.2

Fig.1

Fig. 31

R-4-30

Fig. 4

(a)

(b)

Fig. 5

Fig. 6

**IN DER BESCHREIBUNG AUFGEFÜHRTE DOKUMENTE**

**In der Beschreibung aufgeführte Patentdokumente**

- WO 2010000666 A1
- JP 041000696 B
- JP 4100674 A
- JP 5154693 A
- US 5102033 A
- WO 9845082 A
- WO 2013164466 A1
- US 3779839 A
- JP H11285817 A